(19) **Europäisches Patentamt**

**European Patent Office**

**Office européen des brevets**

(11) **EP 1 239 304 B1**

(12) **FASCICULE DE BREVET EUROPEEN**

(45) Date de publication et mention
de la délivrance du brevet:
**11.01.2006 Bulletin 2006/02**

(51) Int Cl.:
*G01V 1/30* *(2006.01)*

(21) Numéro de dépôt: **02290520.2**

(22) Date de dépôt: **04.03.2002**

(54) **Perfectionnements aux procédés d'inversion tomographique d'événements pointés sur les données sismiques migrées**

Verbesserungen von Verfahren zur tomographischen Invertierung von ausgewählten Ereignissen in migrierten seismischen Daten

Improvements of processes for tomographic inversion of picked events in migrated seismic data

(84) Etats contractants désignés:
**FR GB**

(30) Priorité: **05.03.2001 FR 0102962**

(43) Date de publication de la demande:
**11.09.2002 Bulletin 2002/37**

(73) Titulaire: **COMPAGNIE GENERALE DE GEOPHYSIQUE**
**F-91300 Massy (FR)**

(72) Inventeur: **Guillaume, Patrice**
**91400 Orsay (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**US-A- 5 570 321          US-A- 5 640 368**
**US-B1- 6 253 157**

• **AL-YAHYA K: "VELOCITY ANALYSIS BY ITERATIVE PROFILE MIGRATION" GEOPHYSICS, SOCIETY OF EXPLORATION GEOPHYSICISTS. TULSA, US, vol. 54, no. 6, 1 juin 1989 (1989-06-01), pages 718-729, XP002030424 ISSN: 0016-8033**
• **ECKHARDT W: "VELOCITY MODEL UPDATING USING IMAGE GATHERS" GEOPHYSICAL PROSPECTING, OXFORD, GB, vol. 42, no. 5, 1 juillet 1994 (1994-07-01), pages 975-986, XP000619878**

**Description**

La présente invention est relative aux procédés d'inversion tomographique d'événements pointés sur des traces sismiques.

Pour reconstruire des images du sous-sol, les géologues ou géophysiciens utilisent classiquement des émetteurs acoustiques placés par exemple en surface. Ces émetteurs émettent des ondes qui se propagent dans le sous-sol et se réfléchissent sur les surfaces des différentes couches de celui-ci (réflecteurs). Les ondes acoustiques réfléchies vers la surface sont enregistrées en fonction du temps par des récepteurs. Les signaux enregistrés par les récepteurs sont appelés traces sismiques.

On sait classiquement pointer sur de telles traces sismiques des portions qui correspondent à la réflexion d'impulsions acoustiques émises en surface et qui correspondent à des réflecteurs d'intérêt, ainsi que déterminer les temps de trajet qui correspondent à ces réflexions.

Les techniques d'inversion tomographique consistent à déterminer, en fonction des traces sismiques acquises et d'une sélection d'événements, des modélisations des champs de vitesse dans le sous-sol.

De nombreuses techniques d'inversion sont déjà connues.

Il est en particulier classiquement connu d'inverser les temps d'arrivée des ondes réfléchies et notamment de déterminer le champ de vitesse dans le sous-sol en minimisant l'écart entre les temps d'arrivée observés et les temps d'arrivée modélisés, ces derniers étant calculés par tracé de rais, dans le modèle d'inversion, entre les émetteurs et les sources.

L'inversion des temps de trajets s'avère difficile à mettre en oeuvre dans le cas de structures géologiques complexes, du fait notamment d'un manque de discrimination des arrivées multiples.

D'autres techniques d'inversion tomographique sont des techniques qui mettent en oeuvre des migrations en profondeur.

Une migration en profondeur avant addition des données sismiques consiste à déterminer pour chaque position x,y de surface une collection de traces migrées portant des événements qui décrivent le sous-sol à l'aplomb de ladite position de surface (x, y). Une telle collection de traces est généralement rangée par classes de distances source-récepteur (distances également appelées distances de déport ou d'offset) et également par classes d'angles spéculaires croissants, et plus rarement par classes d'orientation du segment source- récepteur.

Lorsque le modèle de vitesse utilisé reflète correctement la réalité, la profondeur associée à un événement se réfléchissant à l'aplomb d'une position de surface est sensiblement constante quelle que soit la distance de déport ou l'orientation de la trace considérée (ou encore l'angle spéculaire).

Des procédés d'inversion tomographique en profondeur utilisent cette caractéristique pour définir le critère d'inversion à minimiser.

Notamment, il a été proposé dans :

- "Velocity analysis by iterative profile migration" - Kamal Al-Yahya - Geophysics, Vol. 54, n°6, 1989, p. 718-729

un procédé d'inversion dans lequel on détermine le modèle de vitesse du sous-sol en minimisant l'écart à l'horizontalité de la courbe profondeur/distance d'une collection de traces migrées.

La mise en oeuvre de cette technique suppose que plusieurs migrations en profondeur soient effectuées, ce qui est particulièrement fastidieux à mettre en oeuvre lorsque plusieurs itérations sont nécessaires pour converger.

Un but de l'invention est de proposer une technique d'inversion qui réduit sensiblement le nombre de migrations profondeur à effectuer pour construire un modèle optimum et ne nécessite pas une puissance de calcul importante.

Elle propose à cet effet un procédé pour la mise à jour d'un modèle de vitesse d'un sous-sol, selon lequel :

- on met en oeuvre sur un ensemble de traces sismiques acquises au droit dudit sous-sol une migration profondeur avant addition des données, cette migration étant mise en oeuvre à l'aide d'au moins un modèle de vitesse de départ et permettant de déterminer une ou plusieurs collection de traces qui décrivent chacune le sous-sol à l'aplomb d'un point de surface,
- on pointe sur au moins une collection de traces obtenue à l'aide de cette migration un ou plusieurs événements qui se réfléchissent à l'aplomb du point de surface considéré et on détermine pour chaque événement pointé une profondeur et un pendage de réflecteur et un pendage de réflecteur au droit dudit point de surface,
- on met en oeuvre un tracé de rais entre ce réflecteur et la surface pour déterminer des collections de couples source acoustique-récepteur, ainsi que données caractéristiques des temps de trajet et des gradients temps qui correspondent aux tracés de rais associés à ces couples,

caractérisé en ce qu'on met ensuite en oeuvre un traitement selon lequel on itère les étapes consistant à :

- migrer cinématiquement des données de temps de trajet et de gradient temps obtenues précédemment à l'aide d'une paramétrisation du champ de vitesse,
- caractériser l'alignement des points migrés ainsi obtenus,
- mettre à jour la paramétrisation,

le traitement sélectionnant la paramétrisation de champ de vitesse qui optimise l'alignement desdits points migrés.

Les trois étapes précédentes peuvent être répétées jusqu'à l'obtention d'un alignement jugé suffisant.

On notera que le traitement de sélection de la paramétrisation du champ de vitesse ainsi proposé ne nécessite pas d'effectuer systématiquement une migration profondeur des données sismiques (fort couteuse) après chaque mise à jour des vitesses.

On comprend par conséquent que le procédé proposé par l'invention peut être mis en oeuvre sans nécessiter des puissances de calcul importantes.

Dans une mise en oeuvre avantageuse, la migration en profondeur avant addition des données est mise en oeuvre pour une pluralité de champs de vitesses (CRP scan par exemple) et pour déterminer la profondeur et le pendage du réflecteur, on sélectionne celui de ces champs de vitesses qui minimise l'écart à l'horizontalité de la courbe profondeur/distance de déport ou de la courbe profondeur/angle spéculaire.

Par ailleurs, la profondeur de réflecteur peut être avantageusement déterminée pour différents déports ou angles spéculaires.

Selon un mode de mise en oeuvre préféré possible, pour sélectionner une paramétrisation du champ de vitesse qui optimise l'alignement de points qui sont migrés à partir des données de temps et de gradient temps, on détermine la distance entre les portions de réflecteur vues pour différents déports de la collection, la paramétrisation de champ de vitesse sélectionnée étant celle qui minimise cette distance.

Selon un autre mode de mise en oeuvre, pour sélectionner une paramétrisation du champ de vitesse qui optimise l'alignement de points qui sont migrés à partir des données de temps et de gradient temps, on détermine les différences de profondeurs entre des points d'interception entre une verticale donnée et des portions de réflecteur qui sont parallèles au réflecteur mis à jour précédemment et qui passent par les nouveaux points migrés, la paramétrisation de champ de vitesse sélectionnée étant celle qui minimise cette différence.

En variante encore, les pendages considérés pour chaque déport d'une même collection peuvent ne pas être parallèles, auquel cas ils peuvent être déterminés à partir des rais.

Egalement, on peut mettre en oeuvre les étapes suivantes pour sélectionner une paramétrisation du champ de vitesse, :

- on détermine pour un point migré un réflecteur passant par celui-ci,
- on trace les rais entre ce point migré et la surface et
- on détermine une erreur temporelle qui est fonction de l'écart entre le temps de trajet correspondant à au moins un de ces rais et le temps de trajet de la trace qui dans la collection correspond à la même distance de déport ou au même angle spéculaire,
- on sélectionne une paramétrisation de champ de vitesse qui minimise cette erreur temporelle et optimise l'alignement de points qui sont migrés à partir des données temps et de gradient temps.

En variante ou en complément, on peut également mettre en oeuvre les étapes suivantes :

- on détermine pour un point migré un réflecteur passant par celui-ci,
- on trace les rais entre ce point migré et la surface et
- on détermine une erreur temporelle qui est fonction de l'écart entre le gradient de temps de trajet correspondant à au moins un de ces rais et le gradient de temps de trajet de la trace qui dans la collection correspond à la même distance de déport ou au même angle spéculaire,
- on sélectionne une paramétrisation de champ de vitesse qui minimise cette erreur temporelle et optimise l'alignement de points qui sont migrés à partir des données de temps et de gradient temps.

D'autres caractéristiques et avantages de l'invention ressortiront encore de la description qui suit, laquelle est purement illustrative et non limitative et doit être lue en regard des dessins annexés sur lesquels :

- la figure 1 est un organigramme qui illustre un mode de mise en oeuvre possible pour l'invention ;
- la figure 2 est une représentation schématique d'un sous-sol illustrant la mise en oeuvre de certaines étapes du traitement de la figure 1 ;
- la figure 3 est une représentation schématique illustrant d'autres étapes.

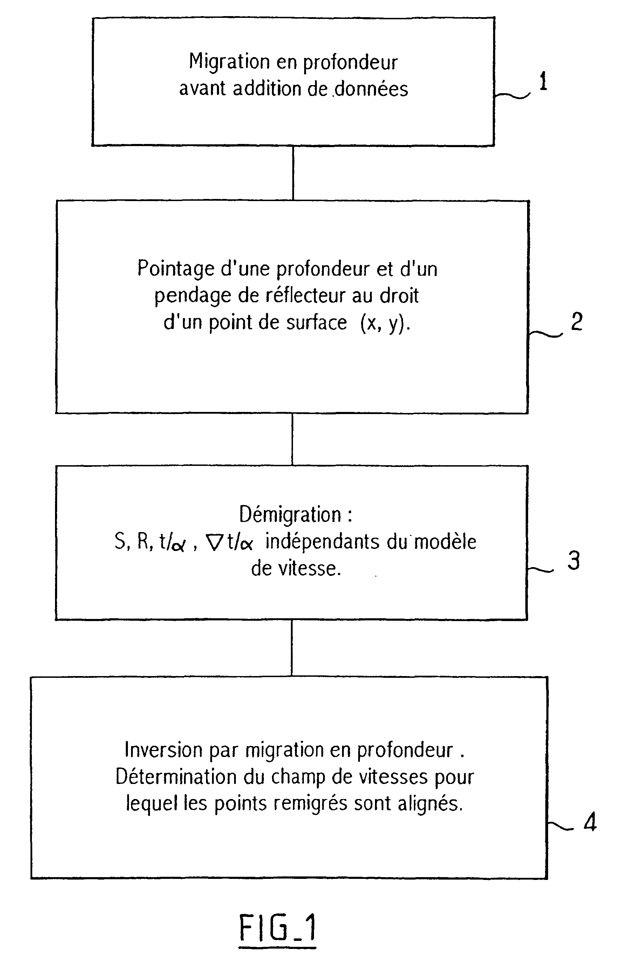

Le traitement illustré sur la figure 1 comporte une première étape 1 qui consiste à migrer en profondeur les données sismiques pour déterminer pour un point de surface de coordonnées X, Y données les événements qui sur une collection de traces sismiques correspondent à une réflexion à l'aplomb de ce point.

Cette migration est déterminée avec un modèle initial de vitesse de sous sol. Ce modèle peut être constitué en plusieurs couches.

Pour chacune des couches de ce modèle initial, le champ de vitesse est par exemple du type

$$V(x,y,z)= (V0(x,y)+k(x,y)\,{}^*z)^*An(\varepsilon,\delta,0phase)$$

où :

- x, y et z sont les coordonnées du point du sous-sol que l'on considère, z étant la profondeur ;
- V(x, y, z) est la vitesse acoustique au point de coordonnées x, y, z du sous-sol ;
- V0(x, y) et k(x, y) sont deux fonctions qui dépendent des coordonnées x et y
- $An(\varepsilon(x, y), \delta(x, y), \theta)$ étant un terme décrivant l'anisotropie et pouvant dépendre de x et y, où $\varepsilon,\delta$ sont par exemple les paramètres d'anisotropie faible décrits par Thomsen (Geophysics 1986), et où $\theta$ est l'angle de phase décrivant la direction de propagation des ondes.

Le traitement de migration profondeur avant addition peut également avantageusement être mis en oeuvre pour une pluralité de modèles de vitesse correspondant à différentes perturbations possibles par rapport au modèle de vitesse initial.

Ces perturbations sont par exemple de type linéaire et fonction d'un coefficient de perturbation auquel on donne différentes valeurs pour disposer de différents modèles voisins du modèle de champ de vitesse initial. La perturbation peut s'appliquer soit à une seule couche, soit à l'ensemble du modèle.

Pour reprendre l'exemple de modèle de vitesse initial donné précédemment, un modèle de vitesse perturbé pourra être :

$V_\alpha(x,y,z)=(\alpha V0(x,y)+ K(x,y)^*z)^*An$ dans le cas d'une perturbation appliquée uniquement à une couche ou
$V_\alpha(x,y,z)=\alpha^*(V0(x,y)+ K(x,y)^*z)^*An$ dans le cas d'une perturbation appliquée uniquement à l'ensemble du modèle,

où $\alpha$ est le paramètre de perturbation et à une valeur qui varie par exemple de 0,8 à 1,2.

Cette technique de balayage de plusieurs modèles de vitesse au moyen d'un coefficient linéaire est appelée "CRP-scan" et a par exemple été décrite dans le cas de migration 3D dans l'article suivant :

- Audebert, Diet, Zhang, "CRP scans for 3D pre-stack Depth Migration : A powerful combination of CRP-gathers and velocity scan", SEG, 1996, Expanded Abstracts - p.515-518.

Après migration, on détermine dans une deuxième étape (étape 2 sur la figure 1) la profondeur et le pendage du réflecteur que l'on cherche à mettre à jour à l'aplomb du point de surface de coordonnées x, y considéré.

Dans le cas où plusieurs modèles de vitesses ont été balayés, on pointe celui de ces modèles qui correspond à l'écart à l'horizontalité de la courbe profondeur/distance d'offset le plus faible, la profondeur $Z\alpha$ et le pendage $D\alpha$ que l'on détermine pour le réflecteur étant alors fonction du modèle ainsi pointé.

Une fois ce pendage et cette profondeur déterminée, on met en oeuvre avec le modèle de vitesse considéré (celui du coefficient linéaire $\alpha$ qui correspond à l'écart à l'horizontalité le plus faible) un traitement inverse d'un traitement de migration.

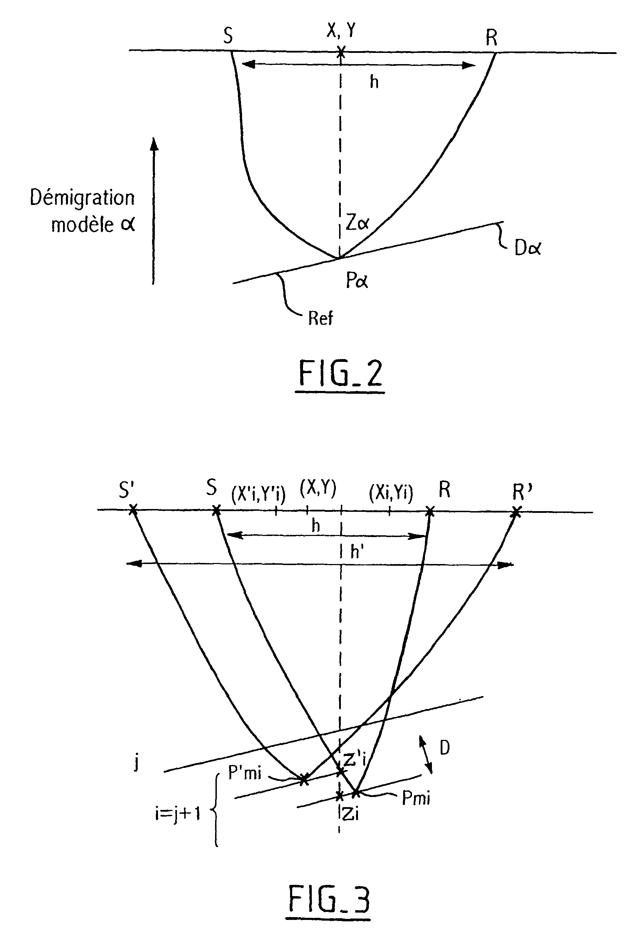

Ce traitement - appelé traitement de démigration (figure 2) - consiste en des tracés de rais pour chaque déport et en fonction de l'orientation source-récepteur à partir d'un réflecteur (réflecteur Ref sur la figure) qui correspondrait à la profondeur (fonction du déport) et au pendage que l'on a déterminé à l'aplomb du point de surface de coordonnées x, y.

Les données obtenues par ce tracé de rais inverse du réflecteur vers la surface ont l'avantage d'être totalement indépendantes du modèle de vitesse considéré. Ces données sont notamment les positions à la surface des couples source-récepteur (S, R) correspondant à une réflexion sur le réflecteur Ref, ainsi que les temps de trajets et les gradients temps qui correspondent aux rais calculés, ces temps de trajet et gradients temps étant indépendants du modèle de vitesse considéré lorsqu'ils sont rapportés au coefficient $\alpha$ dans lequel le traitement de démigration a été mis en oeuvre ($t/\alpha$ et $\nabla t/\alpha$ sur la figure 2 dans le cas d'une perturbation appliquée au modèle).

On pourra à cet égard avantageusement se rapporter à l'article :

Audebert, Diet, Guillaume, Jones, Zhang - CRP-scans : "3D PreSDM Velocity Analysis via Zero Offset Tomographic Inversion" - 1997 - Expanded Abstracts - Soc. Expl. Geophys. -pp. 1805-1808.

Dans une étape suivante (étape 4 sur la figure 1), on met en oeuvre avec les données ainsi obtenues un traitement consistant, pour une distance d'offset h choisie, à migrer par tracé de rais pour déterminer le point de réflexion du couple source/récepteur S, R qui correspond à cette distance d'offset h et qui honore les temps de trajet et les gradients temps préalablement constitués.

Cette migration cinématique est faite soit dans le modèle de migration, soit après avoir introduit une perturbation sur le modèle de vitesse utilisé dans l'étape 3 de démigration.

Comme l'illustre la figure 3, cette nouvelle migration permet de déterminer un nouveau point migré Pmi, ce point étant défini par sa profondeur Zi, ainsi que par les coordonnées Xi, Yi qui correspondent aux coordonnées du point de surface à l'aplomb duquel ce point Pmi se trouve.

Cette migration est mise en oeuvre pour différentes distances d'offset - ou différents angles spéculaires, ce qui est équivalent - de la collection de traces obtenue à l'issue de l'étape 3.

Comme l'illustre la figure 3, les différents points migrés (en l'occurrence Pmi, P'mi obtenus pour ces différentes distances d'offset (en l'occurrence h, h') - ou ces différents angles spéculaires - sont dispersés latéralement et ne sont pas concentrés sur le point Pα.

Le procédé proposé tire toutefois partie de ce que lorsque le modèle de vitesse que l'on utilise reflète correctement la réalité, ces différents points migrés doivent être alignés sur une même portion de réflecteur.

Or, en faisant l'hypothèse que le réflecteur i que l'on cherche à mettre à jour peut se comparer au réflecteur j qui correspond à la couche mise à jour précédemment (ce qui est d'autant plus proche de la réalité que la courbure résiduelle, est faible), il est possible de caractériser le fait que les points remigrés (Pmi, Pmi' sur la figure 3) sont plus ou moins alignés sur une même portion de réflecteur.

En faisant cette hypothèse, on peut par exemple déterminer le champ de vitesse que l'on recherche en minimisant la distance entre les portions de réflecteur vues par différentes traces de la collection migrée dans l'étape 3 (distance D sur la figure 3), ces portions de réflecteurs étant supposées parallèles ou quasi parallèles au réflecteur j.

Un autre critère encore peut consister à minimiser les écarts entre les profondeurs des points d'intercepts entre une verticale (par exemple celle à l'aplomb du barycentre des lieux migrés) et les portions de réflecteur plus ou moins parallèles au réflecteur j mis à jour précédemment et passant par les nouveaux points migrés (écart entre les coordonnées Zi, Z'i sur la figure 3).

Dans l'un et l'autre cas, les minimisations sont mises en oeuvre en modifiant par itérations successives les paramétrisations du modèle de vitesse.

A titre d'exemples, les perturbations de paramétrisation utilisées successivement peuvent être déterminées en fonction des tracés de rais calculés lors de chaque nouvelle migration, pour les distances d'offset ou les angles spéculaires considérés, de la façon qui est proposée dans :

- Liu et al., 1994 - "Velocity analysis by perturbation" - Sixty fourth Annual International Meeting, Soc. Expl. Geophys., expended abstracts, 1991-1994 ;
- Liu et al., 1995 - "Migration velocity analysis : theory and iterative algorithm", Geophysics - 60-142-153 ;
- Wang et al. - "Macro velocity model estimation through model based globally optimised residual curvature analysis" - Expended abstracts - Soc. Expl. Geophys., 1596-1599 (1998),

les techniques décrites dans ces articles utilisant le fait que les champs de vitesse v et les profondeurs z des points de réflexion des rais vérifient :

$$\partial z/\partial v = A \partial t/\partial v$$

où t est le temps de trajet du rai et A un paramètre qui est fonction du pendage du sous-sol et est calculable notamment à partir du rai.

Par ailleurs, le traitement de sélection de la paramétrisation de champ de vitesse peut prendre en considération d'autres critères en plus de l'optimisation de l'alignement de points qui sont migrés à partir de ladite collection de traces.

Notamment, il est également possible de déterminer, par exemple pour la distance de déport qui correspond au point migré Pmi le plus proche du réflecteur Ref, la portion de réflecteur qui correspond à ce point Pmi et qui est parallèle à la couche J mise à jour. Puis, pour chacune des traces de la collection obtenue à l'issue de l'étape 3, on trace le rayon qui se réfléchit sur la portion de ce réflexion No. Les rais ainsi obtenus ont des temps de trajet et des gradients de temps différents de ceux obtenus à l'issue de l'étape 3. Les écarts entre les temps ou gradients de temps obtenus à l'issue de l'étape 3 et ceux obtenus par ces tracés de rais constituent des attributs d'erreurs qui permettent également de caractériser la convergence du champ de vitesse choisi par rapport au champ de vitesse réel.

**Revendications**

1. Procédé pour la mise à jour d'un modèle de vitesse d'un sous-sol, selon lequel :

   - on met en oeuvre sur un ensemble de traces sismiques acquises au droit dudit sous-sol une migration profondeur avant addition des données, cette migration étant mise en oeuvre à l'aide d'au moins un modèle de vitesse de départ et permettant de déterminer une ou plusieurs collections de traces qui décrivent chacune le sous-sol à l'aplomb d'un point de surface,
   - on pointe sur au moins une collection de traces obtenue à l'aide de cette migration un ou plusieurs événements qui se réfléchissent à l'aplomb du point de surface considéré et on détermine pour chaque événement pointé une profondeur et un pendage de réflecteur au droit dudit point de surface,
   - on met en oeuvre un tracé de rais entre ce réflecteur et la surface pour déterminer des collections de couples source acoustique-récepteur, ainsi que des données caractéristiques des temps de trajet et des gradients temps qui correspondent aux tracés de rais associés à ces couples,

   **caractérisé en ce qu'**on met ensuite en oeuvre un traitement selon lequel on itère les étapes consistant à :

   - migrer cinématiquement des données de temps de trajet et de gradient temps obtenues précédemment à l'aide d'une paramétrisation du champ de vitesse par un traitement consistant, pour une distance source-récepteur choisie, à migrer par tracé de rais pour déterminer le point de réflexion du couple source-récepteur correspondant à ladite distance et qui honore lesdites données de temps de trajet et de gradient temps,
   - caractériser l'alignement des points migrés sur le réflecteur ainsi obtenus,
   - mettre à jour la paramétrisation,

   le traitement sélectionnant la paramétrisation de champ de vitesse qui optimise l'alignement desdits points migrés sur le réflecteur.

2. Procédé selon la revendication 1, **caractérisé en ce que** la migration en profondeur avant addition des données sismiques est mise en oeuvre pour une pluralité de champs de vitesses et **en ce que** pour déterminer la profondeur et le pendage du réflecteur, on sélectionne celui de ces champs de vitesses qui minimise l'écart à l'horizontalité de la courbe profondeur/distance de déport ou de la courbe profondeur/angle spéculaire.

3. Procédé selon l'une des revendications précédentes, **caractérisé en ce que** la profondeur de réflecteur est déterminée pour différents déports ou angles spéculaires.

4. Procédé selon la revendication 1, **caractérisé en ce que** pour sélectionner une paramétrisation du champ de vitesse qui optimise l'alignement de points qui sont migrés à partir des données sismiques de temps et de gradient temps, on détermine la distance entre les portions de réflecteur vues pour différents déports, la paramétrisation de champ de vitesse sélectionnée étant celle qui minimise cette distance.

5. Procédé selon la revendication 1, **caractérisé en ce que** pour sélectionner une paramétrisation du champ de vitesse qui optimise l'alignement de points qui sont migrés à partir des données de temps et de gradient temps, on détermine les différences de profondeurs entre des points d'interception entre une verticale donnée et des portions de réflecteur qui sont parallèles au réflecteur mis à jour précédemment et qui passent par les nouveaux points migrés, la paramétrisation de champ de vitesse sélectionnée étant celle qui minimise cette différence..

6. Procédé selon l'une des revendications précédentes, **caractérisé en ce que** pour sélectionner une paramétrisation du champ de vitesse, :

   - on détermine pour un point migré un réflecteur local passant par celui-ci,
   - on trace les autres rais de la collection entre ce réflecteur local et la surface et
   - on détermine une erreur temporelle qui est fonction de l'écart entre le temps de trajet correspondant à au moins un de ces rais et le temps de trajet de la trace qui dans la collection correspond à la même distance de déport ou au même angle spéculaire,

- on sélectionne une paramétrisation de champ de vitesse qui minimise cette erreur temporelle et optimise l'alignement de points qui sont migrés à partir des données sismiques temps et de gradient temps.

**7.** Procédé selon l'une des revendications précédentes; **caractérisé en ce que** pour sélectionner une paramétrisation du champ de vitesse, :

- on détermine pour un point migré un réflecteur passant par celui-ci,
- on trace les autres rais de la collection entre ce réflecteur et la surface et
- on détermine une erreur temporelle qui est fonction de l'écart entre le gradient de temps de trajet correspondant à au moins un de ces rais et le gradient de temps de trajet de la trace qui dans la collection correspond à la même distance de déport ou au même angle spéculaire,
- on sélectionne une paramétrisation de champ de vitesse qui minimise cette erreur temporelle et optimise l'alignement de points qui sont migrés à partir des données sismiques de temps et de gradient temps.

**Patentansprüche**

**1.** Verfahren zum Aktualisieren eines Geschwindigkeitsmodells eines Untergrunds, gemäß dem:

- eine Tiefenmigration vor der Datenaddition auf eine Gesamtheit von in diesem Untergrund erfaßten seismischen Signalen ausgeführt wird, wobei diese Migration mit Hilfe wenigstens eines Ausgangsgeschwindigkeitsmodells ausgeführt wird und es gestattet, eine oder mehrere Signalgruppen zu bestimmen, von denen jede den Untergrund senkrecht unter einem Oberflächenpunkt beschreibt,
- in wenigstens einer mit Hilfe dieser Migration erhaltenen Signalgruppe ein oder mehrere Ereignisse ausgewählt werden, die senkrecht unter dem betrachteten Oberflächenpunkt reflektiert werden, und für jedes ausgewählte Ereignis eine Tiefe und Neigung des Reflektors unter diesem Oberflächenpunkt bestimmt werden,
- ein Strahlenwegplan zwischen diesem Reflektor und der Oberfläche angewendet wird, um Gruppen von akustische Quelle-Empfänger-Paaren zu bestimmen, sowie Daten, die die Laufzeiten und Zeitgradienten kennzeichnen, die den zu diesen Paaren gehörenden Strahlenwegen entsprechen,

**dadurch gekennzeichnet, daß** anschließend eine Verarbeitung angewendet wird, gemäß der die Schritte iteriert werden, die aus folgendem bestehen:

- kinematisches Migrieren von Laufzeitdaten und Zeitgradientendaten, die zuvor mittels einer Parametrierung des Geschwindigkeitsfeldes erhalten wurden, durch eine Verarbeitung, die für einen ausgewählten Quelle-Empfänger-Abstand daraus besteht, über den Strahlenweg zu migrieren, um den Reflexionspunkt des Quelle-Empfänger-Paares zu bestimmen, der diesem Abstand entspricht und der die Laufzeit- und Zeitgradientendaten einhält,
- Kennzeichnen der Aufreihung der migrierten Punkte auf dem so erhaltenen Reflektor,
- Aktualisieren der Parametrierung,

wobei die Verarbeitung die Parametrierung des Geschwindigkeitsfeldes auswählt, die die Aufreihung der migrierten Punkte auf dem Reflektor optimiert.

**2.** Verfahren nach Anspruch 1, **dadurch gekennzeichnet, daß** die Tiefenmigration vor der Addition der seismischen Daten auf mehrere Geschwindigkeitsfelder angewendet wird und **dadurch**, daß zum Bestimmen der Tiefe und Neigung des Reflektors dasjenige der Geschwindigkeitsfelder ausgewählt wird, das die Abweichung von der waagerechten Lage der Tiefe/Versatzabstand-Kurve oder der Tiefe/Reflexionswinkel-Kurve minimiert.

**3.** Verfahren nach einem der vorhergehenden Ansprüche, **dadurch gekennzeichnet, daß** die Reflektortiefe für verschiedene Versatze oder Reflexionswinkel bestimmt wird.

**4.** Verfahren nach Anspruch 1, **dadurch gekennzeichnet, daß** zur Auswahl. einer Parametrierung des Geschwindigkeitsfeldes, das die Aufreihung der Punkte optimiert, die ausgehend von den seismischen Zeit- und Zeitgradientendaten migriert sind, der Abstand zwischen den für verschiedene Versatze sichtbaren Reflektorabschnitten bestimmt wird, wobei die ausgewählte Parametrierung des Geschwindigkeitsfeldes diejenige ist, die diesen Abstand minimiert.

**5.** Verfahren nach Anspruch 1, **dadurch gekennzeichnet, daß** zur Auswahl einer Parametrierung des Geschwindigkeitsfeldes, das die Aufreihung der Punkte optimiert, die ausgehend von den Zeit- und Zeitgradientendaten migriert sind, die Tiefenunterschiede zwischen Schnittpunkten einer gegebenen Vertikalen mit Reflektorabschnitten, die parallel zum zuvor aktualisierten Reflektor sind und die durch die neuen migrierten Punkte verlaufen, bestimmt werden, wobei die ausgewählte Parametrierung des Geschwindigkeitsfeldes diejenige ist, die diesen Unterschied minimiert.

**6.** Verfahren nach einem der vorhergehenden Ansprüche, **dadurch gekennzeichnet, daß** zur Auswahl einer Parametrierung des Geschwindigkeitsfeldes:

- für einen migrierten Punkt ein lokaler Reflektor bestimmt wird, der durch diesen verläuft,
- die anderen Strahlen der Gruppe zwischen diesem lokalen Reflektor und der Oberfläche gezogen werden und
- ein zeitlicher Fehler bestimmt wird, der abhängt von der Abweichung zwischen der Laufzeit, die wenigstens einem dieser Strahlen entspricht, und der Laufzeit des Wegs, der in der Gruppe demselben Versatzabstand oder demselben Reflexionswinkel entspricht,
- eine Parametrierung des Geschwindigkeitsfeldes ausgewählt wird, die diesen zeitlichen Fehler minimiert und die Aufreihung der Punkte, die ausgehend von den seismischen Zeit- und Zeitgradientendaten migriert sind, optimiert.

**7.** Verfahren nach einem der vorhergehenden Ansprüche, **dadurch gekennzeichnet, daß** zur Auswahl einer Parametrierung des Geschwindigkeitsfeldes:

- für einen migrierten Punkt ein Reflektor bestimmt wird, der durch diesen verläuft,
- die anderen Strahlen der Gruppe zwischen diesem Reflektor und der Oberfläche gezogen werden und
- ein zeitlicher Fehler bestimmt wird, der abhängt von der Abweichung zwischen dem Laufzeitgradienten, der wenigstens einem dieser Strahlen entspricht, und dem Laufzeitgradienten des Wegs, der in der Gruppe demselben Versatzabstand oder demselben Reflexionswinkel entspricht,
- eine Parametrierung des Geschwindigkeitsfeldes ausgewählt wird, die diesen zeitlichen Fehler minimiert und die Aufreihung der Punkte, die ausgehend von den seismischen Zeit- und Zeitgradientendaten migriert sind, optimiert.

**Claims**

**1.** A method of updating a subsoil velocity model, in which:

- depth migration prior to data addition is implemented on a set of seismic traces acquired in register with said subsoil, the migration being implemented with the help of at least one starting velocity model and serving to determine one or more trace collections each describing the subsoil vertically below a point on the surface;
- one or more events which reflect vertically below the surface point under consideration are picked on at least one collection of traces obtained using said migration, and for each picked event a reflector depth and dip in register with said surface point are determined; and
- ray tracing is implemented between said reflector and the surface to determine collections of sound source and receiver pairs, together with data characteristic of travel times and time gradients which correspond to the ray traces associated with said pairs;

the method being **characterized in that** subsequent processing is implemented in which the following steps are iterated:

- dynamically migrating travel time and time gradient data previously obtained with the help of parameterization of the velocity field by a treatment consisting, for a selected source-receiver distance, in migrating by ray tracing so as to determine the reflection point of the source-receiver pair corresponding to said distance, and which complies with said travel time and time gradient data;
- characterizing the alignment on the reflector of the migrated points obtained in this way; and
- updating the parameterization;

the processing selecting the velocity field parameterization which optimizes the alignment of said migrated points on the reflector.

**2.** A method according to claim 1, **characterized in that** the depth migration prior to addition of the seismic data is implemented for a plurality of velocity fields, and **in that** in order to determine the reflector depth and dip, that one of the velocity fields is selected which minimizes the departure from the horizontal of the depth/offset distance curve or of the depth/specular angle curve.

**3.** A method according to any preceding claim, **characterized in that** the reflector depth is determined for different offsets or different specular angles.

**4.** A method according to claim 1, **characterized in that** in order to select a velocity field parameterization which optimizes the alignment of the points that are migrated from the time and time gradient seismic data, the distance is determined between the reflector portions seen for different offsets, with the selected velocity field parameterization being that which minimizes said distance.

**5.** A method according to claim 1, **characterized in that** in order to select a velocity field parameterization which optimizes the alignment of the points which are migrated from the time and time gradient data, the depth differences between the intercept points between a given vertical and previously updated reflector portions parallel to the reflector and which pass through the new migrated points, with the selected velocity field parameterization being that which minimizes said difference.

**6.** A method according to any preceding claim, **characterized in that** in order to select a velocity field parameterization:

- a local reflector passing through a migrated point is determined;
- the other rays of the collection are traced between said local reflector and the surface;
- a time error is determined which is a function of the difference between the travel time corresponding to at least one of said rays and the travel time of the trace which, in the collection, corresponds to the same offset distance or the same specular angle; and
- a velocity field parameterization is selected which minimizes said time error and optimizes the alignment of the points which are migrated from the time and time gradient seismic data.

**7.** A method according to any preceding claim, **characterized in that** in order to select a velocity field parameterization:

- a reflector is determined passing through a migrated point;
- the other rays of the collection are traced between said reflector and the surface;
- a time error is determined which is a function of the difference between the travel time gradient corresponding to at least one of said rays and the travel time gradient of the trace which, in the collection, corresponds to the same offset distance or to the same specular angle; and
- a velocity field parameterization is selected which minimizes said time error and optimizes the alignment of points which are migrated from the time and time gradient seismic data.

Migration en profondeur
avant addition de données

~ 1

Pointage d'une profondeur et d'un
pendage de réflecteur au droit
d'un point de surface (x, y).

~ 2

Démigration :
S, R, t/$\alpha$ , $\nabla$ t/$\alpha$ indépendants du modèle
de vitesse.

~ 3

Inversion par migration en profondeur .
Détermination du champ de vitesses pour
lequel les points remigrés sont alignés.

~ 4

FIG_1

**FIG_2**

**FIG_3**